# EUROPÄISCHE PATENTSCHRIFT

(11) **EP 4 257 478 B1**
(45) Veröffentlichungstag und Bekanntmachung des Hinweises auf die Patenterteilung: **28.01.2026**
(21) Anmeldenummer: 23166444.2
(22) Anmeldetag: 04.04.2023
(51) Int. Cl.: B64C 1/10, B64D 11/00, B64D 11/06

(54) **TRAGSTRUKTUR FÜR EINE TRENNWANDANORDNUNG FÜR EINE KABINE EINES PASSAGIERFLUGZEUGES**
SUPPORT STRUCTURE FOR A PARTITION ARRANGEMENT FOR A PASSENGER AIRCRAFT CABIN
STRUCTURE PORTEUSE POUR UN AGENCEMENT DE CLOISON POUR UNE CABINE D'UN AVION DE PASSAGERS

(30) Priorität: 07.04.2022 DE 102022108421
(43) Veröffentlichungstag der Anmeldung: 11.10.2023
(73) Patentinhaber: Diehl Aviation Hamburg GmbH, 21129 Hamburg (DE)
(72) Erfinder: Wahl, Claudius, 22846 Norderstedt (DE); Quadbeck, Michael, 22393 Hamburg (DE); Schmidt, Andreas, 21244 Buchholz (DE); Giraldo, Roberto, 22761 Hamburg (DE)
(74) Vertreter: Diehl Patentabteilung

(56) Entgegenhaltungen:
- WO-A2-2007/076357
- US-A- 4 993 666
- US-A1- 2012 228 427
- US-A1- 2013 126 672
- US-A1- 2018 148 178
- US-A1- 2020 391 867

## Beschreibung

Die Erfindung betrifft eine Tragstruktur für eine Trennwandanordnung für eine Kabine eines Passagierflugzeuges. Die Trennwandanordnung enthält eine Trennwand und eine Sitzanordnung. Die Sitzanordnung ist in einem Montagezustand an der Trennwand befestigt. Die Sitzanordnung umfasst wenigstens einen Sitz für Kabinenpersonal (CA: Cabin Attendant), sogenannter CAS (Cabin Attendant Seat). In einem Montagezustand ist die Sitzanordnung an der Trennwand befestigt.

Aus der EP 3 173 331 B1 ist ein Flugzeugstrukturbauteil bekannt, das Folgendes umfasst: eine im Wesentlichen ebene Kerntafel mit einer Gitterrahmenstruktur von lasttragenden Gitterrahmenstangen; und eine Abdeckungstafel, die an einer vorderen Fläche der Kerntafel montiert ist, wobei die Abdeckungstafel Folgendes umfasst: eine Schutzabdeckung mit einer äußeren Form, die der äußeren Form der Kerntafel entspricht, wobei die Schutzabdeckung mindestens eine Ausschnittsöffnung beinhaltet; und mindestens eine Fasertafel, die an der Schutzabdeckung montiert ist und die mindestens eine Ausschnittsöffnung abdeckt, wobei die mindestens eine Fasertafel zwischen der Kerntafel und der Schutzabdeckung eingelegt ist.

Das Flugzeugstrukturbauteil in Form eines Partition-Elements (Partition: Trennwand) kann eine Befestigungsplatte enthalten, die dazu konfiguriert ist, Funktionselemente an dem Partition-Element zu befestigen. Die Befestigungsplatte kann beispielsweise angepasst sein, um eine wandmontierte Flugbegleiter-Sitzbank (CAS-Bank, Cabin Attendant Seat, Flugbegleiter-Sitz) mit einem schwenkbaren Sitz an dem Partition-Element zu montieren.

Aus der US 2020/391867 A1 ist eine Unterkonstruktion für ein Flugzeugkabinenmonument bekannt. Die Unterkonstruktion umfasst eine Vielzahl von Montagebefestigungspunkten zum Halten einer Halterung, um mit einem entsprechenden Montagebefestigungspunkt an einer Gitterstruktur einer lasttragenden Trennwand in Eingriff zu kommen. Das Flugzeugkabinenmonument wird von der lasttragenden Trennwand durch die Unterkonstruktion getragen, die ein erhebliches Gewicht des Monuments trägt und den Kabinenboden von der Last und dem Gewicht des Flugzeugkabinenmonuments entlastet.

Aus der US 2018/148178 A1 ist ein Flugbegleitersitz bekannt. Dieser umfasst einen Rahmen, der auf einer Trägervorrichtung montiert oder in die Trägervorrichtung integriert werden kann, und mindestens eine in den Rahmen integrierte Sitzanordnung. Der Rahmen umfasst einen unteren Abschnitt, einen oberen Abschnitt und einen mittleren Abschnitt, der die mindestens eine Sitzanordnung zumindest teilweise aufnimmt. Der untere Abschnitt ist zumindest in einem an den mittleren Abschnitt angrenzenden Bereich gebogen ausgebildet. Es wird ein Verfahren zum Einbau eines Flugbegleitersitzes bereitgestellt.

Aus der WO 2007 / 076357 A2 ist ein Verfahren bekannt zum Bereitstellen einer optimalen Topologie für eine Struktur auf der Grundlage einer Reihe von Entwurfskriterien, einschließlich mindestens eines Stützpunkts und mindestens einer auf die Struktur anzuwendenden Kraft. Das Verfahren umfasst die Schritte des Identifizierens mehrerer Knoten innerhalb eines Strukturentwurfsbereichs und des Zuweisens eines anfänglichen Dichtewerts zu den mehreren Knoten. Das Verfahren umfasst außerdem die Schritte der Durchführung einer Finite-Elemente-Analyse an den Knoten, der Bestimmung eines Spannungsintensitätswerts für jeden Knoten, der Einstufung der Knoten nach relativen Spannungsintensitätswerten und der Anpassung des Dichtewerts für jeden Knoten. Das Verfahren umfasst auch den Schritt des Wiederholens der Schritte der Durchführung einer Finite-Elemente-Analyse an den Knoten, der Bestimmung des Spannungsintensitätswerts für jeden Knoten, der Einstufung der Knoten nach relativen Spannungsintensitätswerten und der Anpassung des Dichtewerts für jeden Knoten bis ein Abbruchkriterium erfüllt ist und somit eine optimale Topologie zur Verfügung steht.

Aufgabe der vorliegenden Erfindung ist es, Verbesserungen in Hinblick auf eine derartige Trennwandanordnung vorzuschlagen.

Die Aufgabe wird gelöst durch eine Tragstruktur gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Die Tragstruktur ist eine solche für eine Trennwandanordnung wie sie oben beschrieben wurde, für eine Kabine eines Passagierflugzeuges. Die Kabine umfasst insbesondere einen Passagierbereich und einen Personalbereich. Der Passagierbereich enthält im Wesentlichen die Passagiersitze, der Personalbereich Sitzplätze für das Kabinenpersonal und insbesondere eine Bordküche, einen Waschraum, einen Ein- / Ausstiegsbereich für Passagiere usw. Der Personalbereich ist insbesondere ein solcher im entgegen der Flugrichtung liegenden rückwärtigen Teil ("AFT", z.B. bei "Tür Nr. 4" des Flugzeuges) eines Passagierflugzeuges. Alternativ kann die Trennwandanordnung (CAS Partition) auch vorne im Flugzeug, ("FWD", z.B. bei "Tür Nr. 1") installiert werden. In diesem Fall ist die Sitzanordnung (CAS) dann in Flugrichtung, also "vorwärts" weisend an der Partition (Trennwand) angebracht. Der Personalbereich ist dann in Flugrichtung gesehen vor dem Passagierbereich angeordnet. Die Trennwandanordnung enthält also wie oben beschrieben eine Trennwand und eine in einem Montagezustand an der Trennwand befestigte Sitzanordnung. Die Trennwand trennt insbesondere den Personalbereich vom Passagierbereich und verläuft quer zur Längsrichtung des Flugzeuges. Die Sitzanordnung enthält wenigstens einen Kabinenpersonal-Sitz.

Die Tragstruktur enthält eine mechanisch tragende Wandstruktur für die Trennwand bzw. der Trennwand. Dies ist so zu verstehen, dass bei einer existierenden vollständigen Trennwand die Wandstruktur Teil der Trennwand ist. "Mechanisch tragend" ist so zu verstehen, dass die Wandstruktur zumindest hauptsächlich, d.h. zu einem Anteil größer der Hälfte, insbesondere mindestens 75 %, mindestens 80 %, mindestens 90 % oder vollständig die mechanische Belastungsfähigkeit der Wandstruktur bewirkt. Insbesondere ist die Wandstruktur zum Beispiel ein Tragrahmen der Trennwand, der lediglich durch eine mechanisch nicht tragende Verkleidung, Dekorbauteile, eine Folierung, Lackierung Anbauteile usw. ergänzt ist, welche jedoch bezüglich der mechanischen Belastbarkeit der Trennwand keinen zu berücksichtigenden Beitrag leisten. Die Wandstruktur ist also der einzige Bestandteil der Trennwand, der bei einer Festigkeitsbetrachtung der Trennwand zu berücksichtigen ist.

Die Tragstruktur enthält weiterhin eine mechanisch tragende Sitzstruktur für die bzw. der Sitzanordnung. "Für die" und "mechanisch tragend" ist hier in Bezug auf die Sitzanordnung sinngemäß wie oben bei der Wandstruktur zu verstehen.

Die Tragstruktur enthält wenigstens ein Befestigungsmittel. Das Befestigungsmittel ist bestimmungsgemäß dazu vorgesehen und eingerichtet, die Wandstruktur und die Sitzstruktur im Montagezustand bestimmungsgemäß aneinander zu befestigen. "Bestimmungsgemäß" heißt, dass das Befestigungsmittel auf bestimmte oder bestimmte Typen von Wand- / Sitzstrukturen konstruktiv abgestimmt ist und für den Einsatz dort eingerichtet ist; z.B. für die dadurch bestimmten Geometrieanforderungen usw. ausgelegt ist. Mit anderen Worten werden betreffende Wand- / Sitzstrukturen als bekannt hinsichtlich ihrer Geometrie, Größe, Materialeigenschaften usw. vorausgesetzt.

Neben der Tragstruktur enthält die Sitzstruktur insbesondere nur noch Zusatzteile für die bzw. der Sitzanordnung und/oder Trennwand, die nicht oder nur unwesentlich zu der mechanischen Stabilität der Trennwandanordnung beitragen, wie eine Rückenlehne, eine Kopfstütze, ein Sicherheitsgurt, Anbindungspunkte / Schwenkvorrichtung für einen Klappsitz, Befestigungen für Ausrüstungsgegenstände, Staufächer, Anzeigen usw.

Die Tragstruktur umfasst also Wandstruktur, Sitzanordnung und Befestigungsmittel, wobei im Montagezustand sich eine in sich mechanisch feste Tragstruktur ergibt, bei der Wandstruktur und Sitzstruktur mithilfe der Befestigungsmittel tatsächlich aneinander befestigt sind.

In der Tragstruktur sind also die Wandstruktur und die Sitzstruktur mit Hilfe der Befestigungsmittel tatsächlich aneinander befestigt. Dass die Befestigungsmittel "vorgesehen und eingerichtet sind", bezieht sich insbesondere auf eine Festigkeitsanalyse bzw. einen Entwurfs- bzw. einen Designprozess für die Tragstruktur, insbesondere eine virtuelle Modellierung aller Bestandteile, wobei Wandstruktur und Sitzstruktur mit Hilfe der Befestigungsmittel virtuell im virtuellen Montagezustand aneinander befestigt sind.

Die Trennwandanordnung ist also insbesondere zu einer bestimmungsgemäßen Montage in einer bestimmungsgemäßen Kabine eines bestimmungsgemäßen Flugzeuges eingerichtet.

Die Trennwand umfasst also die Tragstruktur und ggf. Zusatzteile, die nicht oder nur unwesentlich eine mechanisch tragende Rolle für die Trennwand spielen. Die Zusatzteile werden dann zum Beispiel in einem Entwurfsprozess oder bei einer Festigkeitsbetrachtung der Tragstruktur weggelassen, zum Beispiel nicht virtuell modelliert, da diese für die Ergebnisse unwesentlich sind.

Die Sitzanordnung ist für eine oder mehrere Personen, insbesondere Kabinenpersonal, ausgelegt. Mehrere Sitzplätze können hierbei integriert eine einzige Doppel-oder Mehrfach-Sitzstruktur aufweisen oder auch Einzelteile für einzelne Personen bzw. Einzelsitze aufweisen, die - zum Beispiel nebeneinander - einzeln an der Trennwand montiert werden. Für Doppel oder Mehrfachsitze wiederum sind insbesondere klappbare Einzelsitze oder eine klappbare Sitzbank für mehrere Personen denkbar. Die o.g. Festigkeitsbetrachtung berücksichtigt jedoch stets die gesamte Sitzstruktur.

Die Wandstruktur ist zusammen mit der Sitzstruktur einstückig ausgeführt.

Die Sitzstruktur ist insbesondere ein unterer, d.h. im Einbauzustand einem Boden der Passagierkabine zugewandter Abschnitt der Sitzanordnung, der insbesondere nur bis zur Höhe einer Sitzflächenanbindung oder nur bis zur Höhe eines oberen Drittels einer Rückenlehne oder bis zur Oberkante der Rückenlehne reicht oder sich über die gesamte Höhe der Sitzanordnung erstreckt.

In einer nicht erfindungsgemäßen Variante kann das Befestigungsmittel konkrete Einzelmittel, wie zum Beispiel eine Schraube oder Niete oder einen Klebstoff, umfassen bzw. aus einer Mehrzahl solcher Einzelmittel bestehen. Gemäß der Erfindung ist unter einem Befestigungsmittel jedoch ein Raumbereich wie zum Beispiel ein nicht erfindungsgemäßer Schweißpunkt oder eine sonstige Stoffschluss- oder nicht erfindungsgemäße Formschlussverbindung zwischen Sitz- und Tragstruktur zu verstehen. Erfindungsgemäß fällt auch eine - generische oder - zwar nicht erfindungsgemäße, aber auch denkbare durch Klebstoff bewirkte - einstückige Verbindung zwischen bzw. Ausführung von Wandstruktur und Sitzstruktur unter den Begriff "Befestigungsmittel". Das Befestigungsmittel entartet hier quasi zu einem "Null-Mittel" in Form der einstückigen Ausführung von Wandstruktur und Sitzstruktur, insbesondere also zu einer gedachten Trennfläche zwischen beiden Strukturen. Auch jeweilige Kombinationen der oben genannten Varianten können als Befestigungsmittel im vorliegenden Sinne verstanden werden.

Gemäß der Erfindung ergibt sich der Vorteil, dass die gesamte Tragstruktur eine Einheit bildet, welche einem Designprozess, einer Festigkeitsanalyse, einem interaktiven Entwurfsprozess usw. und entworfen werden kann, so dass durch das synergetische Zusammenwirken der Elemente Wandstruktur, Sitzstruktur und Befestigungsmittel eine insgesamt zu optimierende bzw. zu betrachtende Einheit entsteht.

Andere Herangehensweise betrachten die Elemente jeweils für sich, berücksichtigen jedoch nicht deren Synergie bei tatsächlicher Befestigung aneinander. Gegenüber solchen Lösungen werden erfindungsgemäß Synergie-Effekte erreicht, die insgesamt zu einer Material-, Gewichtseinsparung, Festigkeitssteigerung usw. führen, welche durch Einzelbetrachtung von Wandstruktur und Sitzstruktur und Befestigungsmitteln nicht erreicht werden können.

Im Ergebnis entsteht insbesondere eine integrierte Anordnung aus Trennwand (auch "Partition") und Sitzanordnung (CAS), daher auch als "integrierte CAS Trennwand" oder "iCAS-Partition" bezeichnet.

Wandstruktur und Sitzstruktur und Befestigungsmittel zusammen bilden daher durch synergetisches Zusammenwirken eine insgesamt mechanisch tragende Tragstruktur der Trennwandanordnung, wobei insbesondere mechanische Belastungen an der Sitzanordnung auch von der Wandstruktur und mechanische Belastungen an der Trennwand auch von der Sitzstruktur mit aufgenommen werden.

Alle Bestandteile der Tragstruktur, also Wandstruktur, Sitzstruktur und Befestigungsmittel, können im Montagezustand hinsichtlich einer gemeinsamen flugtechnischen Festigkeitsbetrachtung synergetisch ergänzend zueinander ausgeführt sein. Dies bezieht sich insbesondere, wie oben erläutert, auch auf eine virtuelle Tragstruktur im virtuellen Montagezustand. Derartige Festigkeitsbetrachtungen sind insbesondere Belastungstests, eine Lastpfadoptimierung, die entwurfstechnische Variation von Materialstärken, Materialien, Geometrien an den Elementen Sitzstruktur und oder Wandstruktur, insbesondere deren Rippenstruktur, wie unten näher erläutert wird.

So erfolgt also explizit eine gegenseitige Berücksichtigung aller Bestandteile der Tragstruktur, insbesondere der gesamten Sitzanordnung und / oder der gesamten Trennwand während eines Designprozesses der Elemente. Im Ergebnis sind dann alle Bestandteile der Tragstruktur lastpfadoptimiert aufeinander abgestimmt, in Bezug auf deren gegenseitige Befestigung im Montagezustand mit Hilfe der Befestigungsmittel.

Die Ausführungen beziehen sich insbesondere auf einen flugtechnisch fachüblichen 16-G-Crashtest der FAA (U.S. Federal Aviation Administration für Flugzeugsitze, welcher auch für die vorliegende Sitzanordnung zu bestehen ist, um einen sogenannten "16 G Sitz" zu erhalten. Insbesondere ergibt sich damit eine diese Anforderungen erfüllende "16G iCAS Partition".

In einer bevorzugten Ausführungsform wird von einer bestimmten bestimmungsgemäßen Trennwand ausgegangen: Diese weist eine Erstreckungsebene auf, die deren Wandebene entspricht. D.h., die Trennwand als flächiges Gebilde erstreckt sich flächig in bzw. entlang dieser Erstreckungsebene. Die Wandstruktur enthält eine sich entlang dieser Erstreckungsebene erstreckende Wandfläche und Rippen. Die Rippen sind fest mit der Wandfläche verbunden. Die Rippen erstrecken sich quer zur Erstreckungsrichtung von der Wandfläche weg, verlaufen also selbst quer zur Erstreckungsebene. Mit anderen Worten ragen die Rippen also quer, insbesondere senkrecht, aus der Erstreckungsebene heraus und bilden somit mechanisch besonders stabile Versteifungsrippen für die Wandfläche. Insbesondere sind die Rippen einstückig mit der Wandfläche ausgeführt. Insbesondere befinden sich die Rippen an der, der Sitzanordnung zugewandten Seite der Wandfläche, wenn die Tragstruktur bzw. Trennwandanordnung bestimmungsgemäß in dem Passagierflugzeug montiert ist. Insbesondere besteht die Wandstruktur ausschließlich aus der Wandfläche und den Rippen. Die Rippen weisen damit insbesondere einen lastpfadoptimierter Verlauf auf, der unter Berücksichtigung der gesamten Tragstruktur aufgefunden wurde, wie oben erläutert. Diese Ausführungsform erlaubt insbesondere besonders materialsparende und damit leichte Trennwände. Mit anderen Worten folgen die Rippen den in der Tragstruktur theoretisch / bei Versuchen / durch Simulation ermittelten Lastpfaden und bilden diese dann körperlich ab.

Gemäß der Erfindung ist die Wandstruktur einstückig ausgeführt. Zusätzlich ist die Sitzstruktur einstückig ausgeführt. Damit ergeben sich besonders einfache und andererseits mechanisch stabile Wandstrukturen und / oder Sitzstrukturen.

Gemäß der Erfindung ist die Wandstruktur zusammen mit der Sitzstruktur einstückig miteinander ausgeführt. Wie oben erläutert, sind dort keine konkreten bzw. diskreten Befestigungsmittel nötig bzw. entarten diese zu der einstückigen Verbindung beider Elemente. Hier ergibt sich durch eine vollständige bzw. vollflächige, nämlich einstückige Verbindung beider Elemente Sitz- und Tragstruktur (einschl. Befestigungsmittel) ein besonders starker oben beschriebener Synergieeffekt, da Kräfte zwischen den Elementen besonders gut und großflächig übergeleitet werden.

Gemäß der Erfindung ist die gesamte Tragstruktur einstückig ausgeführt. Es sind dann keinerlei konkrete Befestigungselemente notwendig, diese sind allesamt zu einer jeweiligen stoffschlüssigen bzw. einstückigen Verbindung der Elemente Sitz- und Wandstruktur entartet. Somit entsteht eine besonders einfache und stabile Tragstruktur.

In einer bevorzugten Ausführungsform ist die Wandstruktur ein Metallteil. In einer nicht erfindungsgemäßen Variante enthält die Wandstruktur ein Metallteil, welches zumindest einen Hauptbestandteil der Wandstruktur bildet. "Hauptbestandteil" ist hier sowie nachfolgend sinngemäß wie oben zu verstehen, dass das Metallteil zu einem Anteil größer der Hälfte, insbesondere mindestens 75 %, mindestens 80 %, mindestens 90 % oder vollständig das Volumen der Wandstruktur darstellt. Alternativ oder zusätzlich ist die Sitzstruktur ein Metallteil. In einer nicht erfindungsgemäßen Variante enthält die Sitzstruktur dieses Metallteil zumindest als Hauptbestandteil. Sinngemäß gelten die gleichen Ausführungen wie bezüglich der Wandstruktur. Das Metall ist insbesondere ein Aluminiumwerkstoff. Hierdurch ergeben sich besonders leichte und stabile Wandstrukturen und / oder Sitzstrukturen.

Gemäß der Erfindung ist die Wandstruktur ein Frästeil. In einer nicht erfindungsgemäßen Variante enthält die Wandstruktur zumindest als Hauptbestandteil ein solches Frästeil. Zusätzlich gilt dies auch für die Sitzstruktur. Das Frästeil ist insbesondere ein Metall-Frästeil. Das Frästeil ist insbesondere individuell angefertigt gemäß der oben genannten synergetischer Festigkeitsbetrachtung / Lastpfadoptimierung und entsprechenden lokalen Material-Verstärkungen / -Abtragungen usw. Insbesondere wird das Frästeil mit einem Herstellungsverfahren durch Fräsen aus einem Vollmaterial erzeugt, wie weiter unten nochmals erläutert wird. Somit lassen sich besonders variantenreiche Wandstrukturen und Sitzstrukturen erstellen und lastpfadoptimierter Bauteile besonders einfach umsetzen.

In einer nicht erfindungsgemäßen Ausführungsform besteht die Sitzstruktur aus mehreren Bauteilen in Form handelsüblicher Massenware oder enthält die Sitzstruktur zumindest eines oder mehrere solcher Bauteile als Hauptbestandteil. Ein derartiges Bauteil ist zum Beispiel ein sogenanntes "Standardprofil". Die Sitzstruktur ist mit anderen Worten also ausschließlich oder hauptsächlich aus Massenware aufgebaut. Derartige Bauteile sind insbesondere Bauteile welche nicht individuell für die Sitzstruktur angefertigt sind. Die Bauteile werden lediglich auf die Sitzstruktur angepasst, zum Beispiel abgelängt, mit Verbindungsbohrungen versehen, abgeschrägt oder anderweitig ausgehend von ihrer Standardform mit vergleichsweise nur geringem Aufwand im Vergleich zu einer individuellen Herstellung bzw. Einzelanfertigung endbearbeitet. Ein solches Standardprofil ist insbesondere ein Vierkantrohr. Gemäß dieser Ausführungsform ergeben sich besonders kostengünstige Sitzstrukturen.

In einer nicht erfindungsgemäßen Ausführungsform enthält die Tragstruktur wenigstens 20 Befestigungsmittel in Form von Einzelmitteln. Ein Einzelmittel ist hier ein einzelnes konkretes Element, wie zum Beispiel eine Schraube, Niete, eine Klebstoffstruktur, ein Schweißpunkten usw. Insbesondere handelt es sich um wenigstens 30, wenigstens 40, wenigstens 50 oder wenigstens 60 Einzelmittel. Somit kann auch anhand von vergleichsweise nahe beieinander liegenden Einzelmitteln ein einem flächigen Stoffschluss entsprechendes Ergebnis erzielt werden.

In einer bevorzugten Ausführungsform ist die Sitzstruktur eine Grundstruktur der Sitzanordnung, die lediglich zur Aufnahme wenigstens eines weiteren Bestandteils der Sitzanordnung ausgebildet ist. Ein weiterer Bestandteil ist zum Beispiel eine Sitzfläche, insbesondere klappbar, oder ein Teil davon, eine Rückenlehne oder ein Teil davon, ein Staufach oder ein Teil davon oder eine Kopfstütze oder ein Teil davon. Die klappbare Sitzfläche enthält insbesondere einer Klappvorrichtung, zum Beispiel eine Schwenk-oder Trag-Traverse.

Insbesondere enthält die Sitzstruktur keine Kopfstütze und/oder kein Gurtsystem der Sitzanordnung. Die Grundstruktur ist insbesondere eine Rahmenstruktur. Die Grundstruktur ist insbesondere dazu eingerichtet, die Bestandteile ausschließlich zu tragen; d.h. die Bestandteile sind nicht unmittelbar an der Wandstruktur gelagert oder befestigt, sondern dies geschieht ausschließlich mittelbar über die Sitzstruktur. So besteht noch eine gewisse Freiheit, die Tragstruktur je nach Bedarf mit wechselnden weiteren Bestandteilen zu kombinieren, um verschiedene Sitzanordnung auszubilden, wobei die Tragstruktur wie oben beschrieben Lastpfadoptimiert stets gleich ausgeführt ist.

Die Aufgabe der Erfindung wird auch gelöst durch eine Trennwandanordnung gemäß Patentanspruch 5 für eine Kabine eines Passagierflugzeuges. Die Trennwandanordnung enthält wie oben bereits ausgeführt die Trennwand und die an der Trennwand befestigte Sitzanordnung mit dem wenigstens einem Kabinenpersonal-Sitz. Die Trennwandanordnung enthält die erfindungsgemäße Tragstruktur. Die Trennwand enthält dabei die Wandstruktur. Die Sitzanordnung enthält die Sitzstruktur. Die Sitzstruktur und damit die Sitzanordnung ist vermittels wenigstens eines der Befestigungsmittel an der Wandstruktur und damit der Trennwand befestigt.

Die Trennwandanordnung und zumindest ein Teil deren möglicher Ausführungsformen sowie die jeweiligen Vorteile wurden sinngemäß bereits im Zusammenhang mit der erfindungsgemäßen Tragstruktur erläutert.

Der Begriff "Trennwand" ist im Sinne der vorliegenden Patentanmeldung weit zu verstehen und betrifft jede Art von Wand in einem Passagierflugzeug.

Insbesondere ist die Trennwand eine "Partition", also eine eigentliche "Trenn"-Wand. Die Trennwand ist dann insbesondere eine solche zur Abtrennung zweier ansonsten offener Raumbereiche des Flugzeuges. Die Trennwand dient - wie oben erläutert - insbesondere dazu, den Passagierbereich vom Personalbereich zu trennen. Die Trennwand kann dabei insbesondere quer in Bezug auf die Längsachse des Flugzeuges verlaufen.

Die Trennwand ist also insbesondere ein "stand-alone"-Bauteil. Alternativ ist die Trennwand eine Wand oder Teilwand einer größeren Struktur.

Insbesondere ist die Trennwand eine solche, die zumindest dazu beiträgt, einen Raumbereich in einem Flugzeug zu umgrenzen, z.B. einen Innenraum eines Waschraumes. Die o.g. größere Struktur ist also insbesondere ein Waschraum ("Lavatory") oder eine Bordküche ("Galley"). Insbesondere ergibt sich damit eine "ICAS Lavatory Wall".

Derartige Wände sind in der Praxis oft als Sandwichbauteile / Fiberglas-Wand ausgeführt, an der ein vollkommen getrennter CAS befestigt wird. Dank der Erfindung kann auch hier die o.g. synergetische Ausführung von Sitz und Wand in Form eines ICAS erfolgen. Dadurch werden die Herstellungskosten auch eines Waschraumes insgesamt gesenkt, Gewicht eingespart und die Nachhaltigkeit / Recycelbarkeit erhöht.

In der Trennwand bzw. deren Wandstruktur ist insbesondere auch ein Türpfosten für eine Waschraumtür berücksichtigt. Auch dieser wird synergetisch ergänzend zueinander zusammen mit Wandstruktur, Sitzstruktur und Befestigungsmittel der Tragstruktur ausgeführt.

Die Trennwand kann daher insbesondere auch längs, oder auch in einer beliebigen anderen Richtung in Bezug auf die Längsachse des Flugzeuges verlaufen.

Nach diesem Konzept ergibt sich eine Reduzierung verschiedener Materialien und eine Reduzierung der Anzahl der Komponenten. Überflüssig werden insbesondere dank einer gefrästen Aluminium-CAS-Wand z.B. - zumindest teilweise - glasfaserverstärkte Brackets, Kerne (von Sandwichbauteilen), Prepregs (von Sandwichbauteilen), Inserts, Aluminium-Befestigungen, Scheiben, Stahlverstärkungen, Klebstoff oder Kernfüllmaterial.

Im Zusammenhang mit einer ICAS-Waschraum-Wand ergibt sich insbesondere eine Entwicklung eines neuen Systems zur Integration von Flugbegleitersitzen und Stauraum für Notausrüstung in die Waschraumwand, eine höhere strukturelle Effizienz, ein geringerer Materialeinsatz (Gewicht) und geringere Kosten, eine Platzersparnis, ein neues Material und Herstellungsverfahren für die Wand zur Lastpfadoptimierung (gefräste Metallplatte), eine iterative Designoptimierung; diese setzt Materialverstärkungen nur dort ein, wo sie benötigt werden und eine Verbesserung der Verbindung zwischen den Monumenten. Sie erhöht die Gesamtsteifigkeit und reduziert die Durchbiegung. Die CAS-Struktur wird teilweise ersetzt und in die Waschraumwand integriert. CAS, Waschraumwand, Türpfosten und Stauraum im CAS werden zusammengeführt.

Die Aufgabe der Erfindung wird auch gelöst durch ein Verfahren gemäß Patentanspruch 6 zum Herstellen der erfindungsgemäßen Tragstruktur oder der erfindungsgemäßen Trennwandanordnung. Hierbei wird von einer Tragstruktur in der oben beschriebenen Form ausgegangen, wobei die Wandstruktur und die Sitzstruktur dadurch einstückig miteinander ausgeführt werden, indem sie zusammen als ein einziges, die Wandstruktur und die Sitzstruktur umfassendes einstückiges Frästeil durch Ausfräsen einer Vollmaterialplatte hergestellt werden.

Gegenstand der Erfindung ist damit auch eine Tragstruktur, die gemäß diesem Verfahren hergestellt ist. Die Vollmaterialplatte ist insbesondere eine solche, die sich entlang der oben genannten Erstreckungsebene über die gesamte Trennwand oder zumindest einen Hauptteil dieser erstreckt (hier bezieht sich "Hauptteil" im Sinne von "Hauptbestandteil" oben auf die Fläche der Trennwand entlang der Erstreckungsebene).

Das Verfahren zumindest ein Teil dessen möglicher Ausführungsformen sowie die jeweiligen Vorteile wurden sinngemäß bereits im Zusammenhang mit der erfindungsgemäßen Tragstruktur und der Trennwandanordnung erläutert.

Die Aufgabe der Erfindung wird auch gelöst durch ein Entwurfsverfahren gemäß Patentanspruch 7 für eine erfindungsgemäße Tragstruktur oder eine erfindungsgemäße Trennwandanordnung. Bei dem Entwurfsverfahren wird die gesamte Tragstruktur im Montagezustand einer Lastpfadoptimierung unterworfen. Insbesondere erfolgt dies iterativ, insbesondere durch Umkonstruktion der Tragstruktur, Materialverstärkungen, Materialwegnahmen, Materialwahl an bestimmten Stellen usw. in fachüblicher Weise. Insbesondere wird das Entwurfsverfahren rein virtuell durchgeführt oder zumindest teilweise virtuell durchgeführt. Insbesondere handelt es sich also um eine virtuelle Tragstruktur bzw. Trennwandanordnung als Objekt des Entwurfverfahrens, wie oben beschrieben.

Das Verfahren und zumindest ein Teil dessen möglicher Ausführungsformen sowie die jeweiligen Vorteile wurden sinngemäß bereits im Zusammenhang mit der erfindungsgemäßen Tragstruktur und der Trennwandanordnung erläutert.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Aus der Praxis ist es bekannt, eine CFK Partition (Trennwand, Sandwichbauweise) eines ersten Herstellers mit Sitz/en (CAS) als Fremdfabrikat eines zweiten Herstellers als Anbauteil zu einer Trennwandanordnung zu kombinieren.

Es ergeben sich vorliegend insbesondere drei unterschiedliche Konzepte A und B (nicht erfindungsgemäß), und C (erfindungsgemäß), die wie folgt zusammengefasst werden können:
Konzept A: Die Wandstruktur besteht aus einem Frästeil, welches durch Ausfräsen einer Aluminium-Vollmaterialplatte der Dicke 30 mm erzeugt wird. Die Sitzstruktur ist ein CAS Rahmen (Grundstruktur), bestehend aus mehreren gefrästen Bauteilen.
Konzept B: Entsprechend Konzept A ist die Wandstruktur ebenfalls ein Frästeil aus der gleichen Vollmaterialplatte. Die Sitzstruktur in Form eines CAS Rahmen (Grundstruktur) besteht dagegen aus mehreren Standardprofilen (handelsüblicher Massenware).
Konzept C: Ein einziges Frästeil, hergestellt aus einer Aluminium-Vollmaterial Platte der Dicke 70 mm, umfasst die Wandstruktur und den CAS Rahmen (Grundstruktur der Sitzstruktur), welcher durch Befräsen derselben Platte integral einstückig aus demselben Rohmaterial hergestellt wird. Somit ergibt sich die Tragstruktur als völlig einstückiges Frästeil.

Im Detail:
Die aus der Praxis bekannte 16-G-Partition wird als konventionelle CFK-Sandwichbauweise mit lokal eingebracht Metallverstärkungen und mit oder ohne integrierter herausziehbarer "Stretcher Flap" (Wandteil) erzeugt. Sie enthält eine obere und untere Flugzeug-Befestigung (zur Befestigung der Trennwand im Flugzeug an dessen Primärstruktur) sowie Anschraubpunkte für den CAS und für Notfallausrüstung (Emergency Equipment). Die CAS Baugruppe stammt von einem anderen Hersteller als die Partition und weist insbesondere eine Rückenlehne und eine klappbare Sitzfläche (Bank für 2 Personen oder Einzelsitz: "single CAS") sowie eine Kopfstütze mit Staufach, ein Gurtsystem für ein oder zwei Flugbegleiter und ein Staufach mit Klappe im Bodenbereich auf. Als Trennwandanordnung ergibt sich somit eine endmontierte Partition mit nachinstalliertem CAS.

Problematisch hierbei ist folgendes: Der CAS wird üblicherweise entwickelt von einem Fremdhersteller für eine "Standardkabinen-Schnittstelle", d.h. eine Trennwand mit vergleichsweise steiferen Randbedingungen als sie z.B. die aus der Praxis bekannte CFK-Trennwand aufweist. Die von einem Trennwandhersteller tatsächlich verwendete (weniger steife) CFK / Komposit-Partition muss daher ein suboptimales CAS Design kompensieren durch massive Zusatzverstärkungen. Problematisch ist weiterhin, wenn der CAS-Hersteller neue CAS Versionen bereitstellt, welche leichter, aber mechanisch schwächer als die vorherige Ausführung sind. Dies führt im Gesamtsystem der Trennwandanordnung zu einer Zerstörung der Partition beim 16-G-Test. Eine weitere Verstärkung der Partition ist dann nötig.

Bei der bekannten Lösung hat der CAS einzig die Funktion, das Kabinenpersonal sowie Notfallausrüstung zu beherbergen. Die CAS-Struktur verstärkt zwar in gewisser Weise auch die Partition, jedoch nur in sehr geringem Maße. Idee der Erfindung ist es hier, Verbesserungen zu erzielen.

Die aus der Praxis bekannte Situation lässt sich daher wie folgt zusammenfassen: Die Verbundtrennwand wurde für einen suboptimalen CAS entworfen, wobei die Besonderheiten eines Partition-Monuments (hohe Deformation) nicht beachtet wurden. Der CAS ist mit nur wenigen, z.B. acht Schrauben an der Trennwand befestigt und verstärkt diese nur in sehr geringem Maße. Der CAS verliert seine Steifigkeit gerade dann, wenn es am meisten benötigt ist, wenn nämlich eine hohe Partition-Verformung auftritt.

Die derzeitigen Kabinenanforderungen stellen sich wie folgt dar: Die Trennwand teilt den Passagierbereich von dem Besatzungs- / Personalbereich. Der CAS die dem Kabinenpersonal als Sitz.

Die Erfindung beruht auf der Beobachtung, dass neue Marktanforderungen bestehen: Die Single-Aisle-Familie von Flugzeugen kämpft mit Gewichtsproblemen, speziell im hinteren Kabinenbereich (AFT Cabin Area). "Grünere" Umweltanforderungen machen eine höhere Effizienz erforderlich. Die engen Platzverhältnisse zwischen dem AFT-Komplex und der Partition machen die Manövrierbarkeit von Trolleys schwierig.

Die Erfindung verfolgt daher einen neuen Ansatz: Es erfolgt eine Integration von CAS und Partition in Bezug auf die gegenseitige Beachtung während des Designs. Beide Monumente werden lastpfadoptimiert, um sowohl die alten und neuen Anforderungen zu erfüllen. Dies wird dadurch erreicht, dass Gestalt und Design des CAS so angepasst werden, um besser zu der Partition-Deformation zu passen und diese zu unterstützen. Es wird eine globale Steifigkeitserhöhung im Bereich oberhalb des CAS umgesetzt, um der starken Partitionsdeformation zu begegnen.

Gemäß der vorgeschlagenen Lösung ergibt sich eine Integration von CAS und Partition, ein neues Material und Herstellungsverfahren für die Partition für eine Lastpfadoptimierung (gefräste Metallplatte), eine interaktive Design-Optimierung platziert Materialverstärkungen nur dort, wo sie benötigt werden, es erfolgt eine Verbesserung der Verbindung zwischen den Monumenten (ungefähr 60 Schrauben für die Konzepte A und B, ideal (weil einstückig) für das Konzept C). Dieses erhöht die insgesamte Steifigkeit und verringert die Verbiegung. Gewichtseinsparung und weniger Bauraum werden erreicht durch leichtere und dünnere Strukturen. Gerundete obere Ecken können realisiert werden. Die oberen Sitzgurtroller werden direkt an der Partition angebracht. Es ergibt sich ein lastaufnehmendes unteres Strukturteil (Grundstruktur) des CAS. Die Rückenlehne wird insbesondere direkt an der Partition angebracht.

Das nicht erfindungsgemäße Konzept A weist insbesondere folgende Merkmale auf:
Obere und untere Flugzeugbefestigung werden unverändert von der bekannten Lösung übernommen. Die Wandstruktur besteht hinsichtlich ihrer Bauweise aus einer ungefähr ein Zoll starken (30mm) Grundplatte aus Aluminium als Grundmaterial, welche lastpfadoptimiert befräst ist, zusammen mit einer 1,6 mm starken Deckelplatte. Beide Teile sind miteinander verschraubt und verklebt. Eine optional vorgesehene herausziehbare Stretcher Flap ist in gefräster Bauweise aus Aluminium gefertigt. Die Kopfstütze umfasst ein Polster und ein integriertes Staufach. Das Gurtsystem wird als Zukaufteil ausgeführt. Die Sitzstruktur enthält einen CAS Rahmen, bestehend aus mehreren gefrästen Aluminiumbauteilen, die auf der Partition (Wandstruktur) befestigt werden. Im Fußbereich befindet sich ein Staufach mit Klappe für Emergency Equipment. Rücken- und Sitzpolster umfassen eine einklappbare Sitzfläche, die Sitzflächenhalterung ist direkt an dem CAS Rahmen befestigt. Der CAS Rahmen ist ein gefrästes Aluminiumsteil mit Verstärkungen. Gemäß dem Konzept A ergibt sich ein neuer Herstellungsprozess für die Partition. Es ergibt sich eine variable Dicke der Metallteile gegenüber der vorher konstanten Dicke von Karbon- / Glas-Prepregs. Die Rippenstruktur folgt dem Lastpfad.

Der CAS ist kein Stand-alone-Bauteil mehr. Rückenlehne und Sitzgurte sind direkt an der Partition befestigt im Gegensatz zur bekannten Bauweise, bei der alles zum CAS gehört. Die Verbindung zwischen CAS und Partition wird verbessert durch Erhöhung der Anzahl der Schrauben von 8 auf ca. 59.

Der CAS Rahmen weist folgende Merkmale auf: Verschiedene Frästeile sind miteinander verschraubt. Der Sitzflächenträger ist direkt an dem Rahmen angebracht. Zusätzliche Teile werden an dem Rahmen für die Staufächer angebracht. Lokale Verstärkungen (7 bis 8 in vertikalen Teilen) vermeiden ein Knicken. Gestalt und Dimensionen sind verändert, um die Lastaufnahmefähigkeiten zu maximieren. Die CAS-Bank ist durch zwei einzelne CAS Sitze ersetzt. Alternativ ist ein Single-CAS vorgesehen. Ein senkrechter Mittelträger ist eingeführt. Die horizontalen oberen und unteren Teile sind verbessert, um die Lastaufnahmefähigkeiten zu maximieren.

Das nicht erfindungsgemäße Konzept B weist insbesondere folgende Merkmale auf:
Die Merkmale entsprechen denen von Konzept A mit folgenden Unterschieden: Der CAS-Rahmen besteht aus mehreren Standardprofilen, die auf der Partition (Wandstruktur) befestigt werden. Verbindungswinkel verbinden die Standardprofile. Der Sitzträger ist an eine zusätzliche Klammer ("Bracket") angebracht, welche wiederum an den Standardprofilen befestigt wird. Der CAS Rahmen mit Verstärkungen besteht aus Alu-Standardprofilen.

Der CAS Rahmen besteht also aus Aluminium-Standardprofilen, welche über Winkel miteinander verschraubt sind. Die Sitzhalterung ist mithilfe zusätzlicher Halterungen (Brackets) am Rahmen angebracht. Die Profile werden mit einem zusätzlichen Kissen abgedeckt. Lokale Verstärkungen sind notwendig, um die Lagerung der Klappsitze zu ermöglichen.

Das Konzept C weist folgende Merkmale auf:
Das Konzept entspricht den Konzepten A und B mit folgenden Unterschieden: Wandstruktur und Sitzstruktur sind hier als einstückiges Bauteil ausgeführt. Dieses ist als gefrästes Aluminiumbauteil aus einer etwa 70 mm starken Grundplatte in Aluminiumbauweise hergestellt, geschraubt und verklebt mit einer 1,6 mm Deckelplatte. Die Bauweise ist lastpfadoptimiert. Das integrale Bauteil weist zusätzliche Rippen zur Befestigung der Rückenlehnen der Sitzanordnung auf. Der Aluminium-CAS-Rahmen mit Verstärkungen (Sitzstruktur) ist also zusammen mit der Partition (Wandstruktur) einstückig durch Befräsen der einzigen Aluminiumgrundplatte erstellt.

Hinsichtlich des neuen Herstellungsprozesses für die Partition sind hier also "Partitionsstege" erweitert und bilden somit den CAS Rahmen bzw. die Sitzstruktur. Der CAS-Rahmen und die Partition stellen die selbe Struktur, d.h. ein einheitliches einstückiges Bauteil dar (Sitzstruktur und Wandstruktur). Die Sitzlagerung ist wieder an den Rahmen angebracht unter Benutzung einer zusätzlichen Klammer.

Im Vergleich der drei Konzepte ergibt sich das Konzept C als besonders vorteilhaft, da es insbesondere insgesamt dünner ist und somit höheres Potenzial für eine Reduktion des Fußabdrucks aufweist.

Insgesamt ist insbesondere folgendes festzustellen:
Die Erfindung beruht auf der Beobachtung, dass in der Praxis bisher Trennwand und Sitz als separate Komponenten vorliegen. Zur eigentlichen Verwendung wird der Sitz an der Trennwand mittels Schrauben befestigt. Die Trennwand wird dabei z.B. in einer Composite-Bauweise aus metallverstärkten Honigwaben-Paneelen mit vorimprägnierten Faser-Matrix-Halbzeugen ("Prepregs") hergestellt. Einzelne separat getestete CA-Seats (CA: Cabin Attendant / Kabinenpersonal-Sitz) anderer Hersteller (bezüglich des Herstellers der Trennwand) mit Befestigung an der Flugzeugstruktur oder an Kabinen-Monumenten (z.B. Lavatory, Stauschrank,etc.) sind bisher nötig.

Die Erfindung beruht auf der Idee der Entwicklung einer neuen Bauweise für Flugzeugkabinen-Trennwände, bei welcher die Composite-Bauweise durch eine monolithische Aluminium-Metallbauweise ersetzt wird. Die Entwicklung dieser Bauweise hebt erhebliches Kostenpotential.

Gemäß der Erfindung werden daher die strukturellen Komponenten des Sitzes im Sinne einer sogenannten integralen Bauweise in die Struktur der Trennwand überführt. Der CA-Seat als separat bestehendes Produkt wird damit aufgelöst. Es entsteht ein integrales Bauteil (Tragstruktur bzw. Trennwandanordnung), welches die prägenden Merkmale beider zuvor separaten Produkte aufweist.

In Kombination ermöglicht die neue Bauweise eine Reduzierung des Gesamtgewichts sowie der baulichen Tiefe unter Beibehaltung der maximalen Verformung bei Belastung. Dies gilt für die Trennwandanordnung ("iCAS Partition") mit einem integrierten, sowie für zwei integrierte CA-Seats. Des Weiteren ist eine Reduzierung der Herstellkosten möglich.

Gemäß der Erfindung ergibt sich damit eine Integralbauweise mit Funktionsintegration. Eine Materialverwendung basiert insbesondere auf recyclingfähigem Aluminium. Es ergibt sich ein geringes Gewicht, geringe Kosten und schnelle Verfügbarkeit.

Die vorgeschlagene Tragstruktur bzw. Trennwandanordnung ("iCAS Partition") kombiniert zwei klassische Funktionen in einer Funktion (Partition + CA-Seat). Die HauptKomponenten eines CA-Seats (z.B. Kopfstütze, Rückenlehne, Klappsitz, etc.) werden separat oder in Baugruppen mit der Partition verbunden und bilden so eine integrale Bauweise. Dies gilt ebenfalls für das Gurt-Rückhaltesystem. Die Partition (integriert als Tragstruktur bzw. Trennwandanordnung) ersetzt die Hauptstruktur eines klassischen separaten CA-Seats. Der Zukauf eines separaten CA-Seats ist somit nicht mehr nötig.

Die hier vorgeschlagene Lösung zeichnet sich durch folgende Merkmale (einzeln oder in Kombination) aus:
- Funktionsintegration von Partition und CAS,
- relevante Einsparung von Gewicht,
- sowohl Single CAS als auch Double CAS möglich,
- Strecher Flap als Option vorhanden,
- Integration von Staufächern und/oder Provisions für relevantes Equipment sind konfigurierbar,
- Klappsitz / -bank mit Gurtsystem,
- Bauweise aus Metall,
- Verbindung durch Schrauben und/oder Nieten und/oder Kleben.

Hinsichtlich der Montage / Integration der Trennwandanordnung im Flugzeug ergibt sich die Nutzung existierender Schnittstellen.

Die vorgeschlagene Trennwandanordnung kann insbesondere für den Einbau auf der linken (LH) Flugzeugseite oder der rechte (RH) Flugzeugseite vorgesehen sein.

Gemäß der Erfindung ergibt sich insbesondere eine Trennwandanordnung in Form einer "16G-Partition", die also dem o.g. 16G-Test standhält.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
Figur 1 eine in einer Kabine eines Passagierflugzeuges endmontierte Trennwandanordnung in symbolischer Seitenansicht im Teilschnitt, welche nicht im Umfang der Ansprüche enthalten ist,
Figur 2 in jeweils perspektivischer Explosionsdarstellung in größerem Detaillierungsgrad die Trennwandanordnung aus Figur 1 nach Konzept A,
Figur 3 nach einem alternativen, nicht erfindungsgemäßem Konzept A, und
Figur 4 einem alternativen, nicht erfindungsgemäßem Konzept B,
Figur 5 einem alternativen Konzept C,
Figur 6 in jeweils perspektivischer Ansicht eine Sitzstruktur in Form eines CAS-Rahmen mit Zusatzteilen nicht erfindungsgemäßem Konzept A,
Figur 7 nicht erfindungsgemäßem Konzept B, und
Figur 8 Konzept C,
Figur 9 eine perspektivische Ansicht einer alternativen Wandstruktur mit Wandfläche und Rippen.

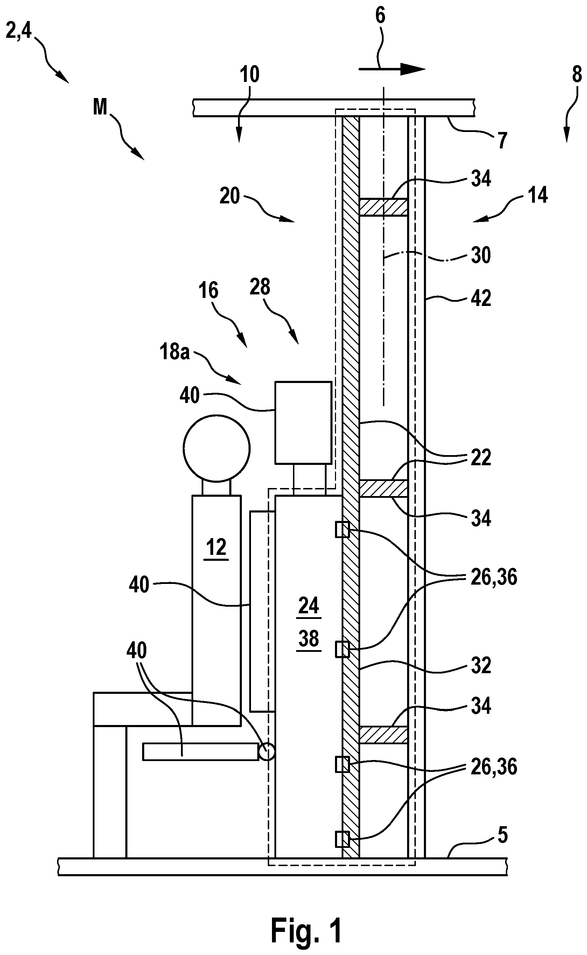

Figur 1 zeigt einen Ausschnitt aus einem Passagierflugzeug 2, nämlich einen Ausschnitt aus dessen Kabine 4. Im Flug bewegt sich das Flugzeug in einer Flugrichtung 6. Die Kabine 4 weist einen Boden 5 und eine Decke 7 auf. Dargestellt ist ein rückwärtiger Teil (AFT) des Flugzeuges 2 und somit auch ein hinteres Ende eines Passagierbereiches 8 der Kabine 4 mit einem rückwärtig daran anschließenden Personalbereich 10 für Kabinenpersonal 12, hier ein hinterer Ausstiegsbereich mit Bordküche und Lavatory. Passagierbereich 8 und Personalbereich 10 sind durch eine Trennwand 14 voneinander getrennt. Dargestellt in Figur 1 ist die Trennwand 14 auf der linken Flugzeugseite (LH) im Schnitt. An der Trennwand 14 ist eine Sitzanordnung 16, hier in einem Montagezustand M, befestigt. Die Sitzanordnung 16 umfasst hier zwei Kabinenpersonal-Sitze 18a,b, von denen in Figur 1 nur der Sitz 18a sichtbar ist. Sitzanordnung 16 und Trennwand 14 bilden zusammen eine Trennwandanordnung 20.

Die Trennwand 14 umfasst eine mechanisch tragende Wandstruktur 22, welche in der Figur 1 schraffiert dargestellt ist. Die Sitzanordnung 16 umfasst eine diese mechanisch tragende Sitzstruktur 24. Befestigungsmittel 26, hier nicht erfindungsgemäße Schrauben, von welchen symbolisch in Figur 1 nur vier Stück dargestellt sind, sind dazu vorgesehen und eingerichtet und im Beispiel auch tatsächlich dazu eingesetzt, im Montagezustand M Wandstruktur 22 und Sitzstruktur 24 aneinander zu befestigen. Sämtliche restlichen Elemente der Trennwand 14 sind an der Wandstruktur 22 befestigt und sämtliche restlichen Elemente der Sitzanordnung 16 sind an der Sitzstruktur 24 befestigt. Daher dienen die Befestigungsmittel 26 auch dazu, die gesamte Sitzanordnung 16 und die gesamte Trennwand 14 im Montagezustand M aneinander zu befestigen und somit die gesamte Trennwandanordnung 20 als mechanisch feste Einheit zu schaffen.

Die Trennwand 14 erstreckt sich im Passagierflugzeug 2 flächig in einer Erstreckungsebene 30 quer zu dessen Flugrichtung 6. Die Erstreckungsebene 30 liegt in Figur 1 senkrecht zur Papierebene. Die Wandstruktur 22 enthält eine, sich entlang dieser Erstreckungsebene 30 erstreckende Wandfläche 32 sowie quer zur Erstreckungsebene 30 sich von der Wandfläche 32 weg erstreckende Rippen 34, welche fest mit der Wandfläche 32 verbunden sind. Die Rippen 34verleihen der gesamten Wandstruktur 22 mechanische Stabilität, indem sie entlang benötigter Lastpfade verlaufen. In der Figur 1 sind Wandfläche 32 und Rippen 34 mit unterschiedlicher Schraffur dargestellt. Tatsächlich sind beide Elemente als einstückige Wandstruktur 22 ausgeführt. Die Rippen 34 weisen also einen lastpfadoptimierten Verlauf unter Berücksichtigung der gesamten Tragstruktur 28 auf. Die Wandstruktur 22 selbst ist also einstückig ausgeführt. Insgesamt umfasst die Tragstruktur hier 59 Befestigungsmittel 26 in Form von Einzelmitteln 36, nämlich nicht erfindungsgemäßen Befestigungsschrauben. Die Tragstruktur 28 ist in Figur 1 durch eine gestrichelte Linie symbolisch umrissen.

Die Sitzstruktur 24 ist hier eine Grundstruktur 38 der Sitzanordnung 16, hier ein Tragrahmen für weitere Bestandteile 40 der Sitzanordnung 16. Als weitere Bestandteile 40 sind hier ein als Rechteck angedeuteter Klappsitz einschließlich gelenkiger Klapplagerung (als Kreis angedeutet), eine Rückenlehne sowie eine Kopfstütze vorgesehen. Sämtliche Bestandteile 40 sind hier ausschließlich an der Grundstruktur 38 befestigt und somit nur mittelbar über diese an der Wandstruktur 22 und damit der Trennwand 14 angebracht.

Die Trennwandanordnung 20 erstreckt sich zwischen dem Boden 5 und der Decke 7 der Kabine 4. Eine Verkleidung 42 ist Bestandteil der Trennwand 14, trägt jedoch nicht zu deren mechanischer Stabilität bei und dient lediglich als optische Verkleidung, damit der Blick auf die Rippen 34 vom Passagierbereich 8 aus verdeckt ist und eine glatte optisch ansprechende Oberfläche der Trennwand 14 zum Passagierbereich 8 hin entsteht. Die Partition in Form der Trennwand 14 besteht hier also aus einer dicken gefrästen Platte in Form der Wandstruktur 22 und aus einem Blech in Form der Verkleidung 42, und beide sind zusammengeklebt und verschraubt.

In Figur 1 befindet sich der Sitz 18a in Benutzung, da eine Person (Kabinenpersonal 12) darauf Platz genommen hat.

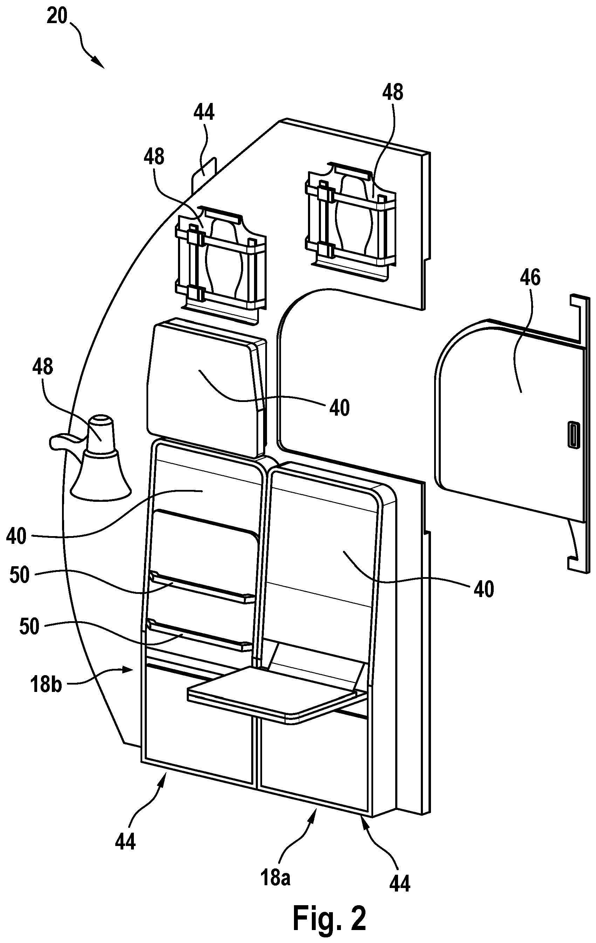

Figur 2 zeigt eine perspektivische Schrägansicht auf die Trennwandanordnung 20 aus Figur 1 vom Personalbereich 10 aus, hier eine alternative Variante in größerem Detailgrad als in Figur 1. Ergänzend zu erkennen ist hier eine obere Befestigung 44, die in nicht näher erläuterter Weise zur Befestigung Wandstruktur 22 und damit der Trennwand 14 an der nicht dargestellten Primärstruktur des Passagierflugzeuges 2 dient. Weitere solche Befestigungen 44 sind unten an der Wandstruktur 22 vorgesehen (in Figur 2 nicht sichtbar). Die Wandstruktur 22 ist hier in monolithischer Aluminium-Metallbauweise hergestellt. Die Trennwand 14 enthält ein herausnehmbares Wandteil 46, eine sogenannte "Stretcher Flap", die dazu dient, in einem Durchtrittsbereich zwischen Passagierbereich 8 und Personalbereich 10 im Bereich der Trennwand 14 einen Freiraum zu vergrößern, zum Beispiel um Platz für eine Patiententrage zu schaffen, die entlang der Flugrichtung 6 in der Kabine 4 befördert werden soll.

In Figur 2 sind nun auch beide Kabinenpersonal Sitze 18a,b zu sehen, wobei die Bestandteile 40 in Form der Sitzfläche bzw. des Klappsitzes des Sitzes 18a heruntergeklappt, die des Sitzes 18b hochgeklappt ist. Die Sitze 18a,b sind somit jeweils Single-CA-Sitze. Der Bestandteil 40 in Form der Kopfstütze des Sitzes 18a ist im Beispiel entfernt, um das Wandteil 46 entfernen zu können. Die Kopfstützen sind hier als Kopfelemente mit Staufach ausgebildet. Die Bestandteile 40 in Form der Rückenlehnen stellen Rückenelemente dar. Unter den Sitzflächen befinden sich noch nicht näher bezeichnete Staufächer, welche hier Payload in Form von Notfallausrüstung, zum Beispiel einen Feuerlöscher, enthalten.

An der Trennwand 14 sind in Figur 2 außerdem weitere Befestigungen / Halterungen 48 für Ausrüstung (weitere Payload wie Schwimmwesten, Megafon) vorgesehen, die hier nicht näher erläutert werden sollen. An den Klappsitzen / Sitzflächen der Sitze 18a,b sind unten bzw. im hochgeklappten Zustand außen Stoßschutzleisten 50 vorgesehen.

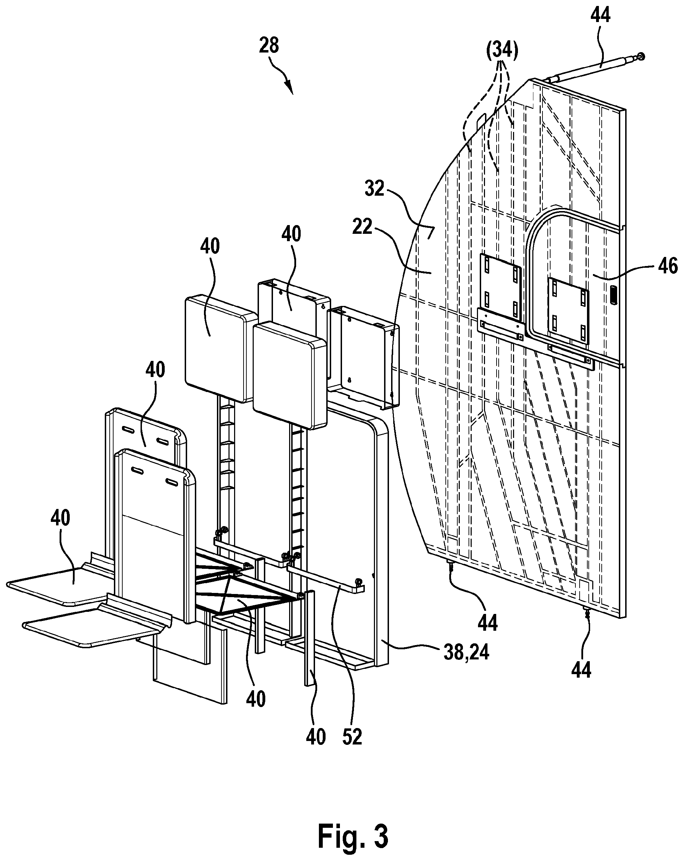

Figur 3 zeigt die Anordnung aus Figur 2 in einer Explosionsdarstellung und mit eingesetztem Wandteil 46. Figuren 2 und 3 zeigen das oben genannte nicht erfindungsgemäße Konzept A der Tragstruktur 28.

Die Rippen 34, welche sich eigentlich auf der in Figur 3 dem Betrachter abgewandten Seite der Wandfläche 32 befinden (daher das Bezugszeichen in Klammern), sind in Figur 3 bezüglich ihres Verlaufes angedeutet. Zu erkennen ist der lastpfadoptimierte Verlauf der Rippen 34. Zu erkennen ist in Figur 3 weiterhin deutlicher als in Figur 2, wie die Kopfstützen mit Polster und integriertem Staufach ausgeführt sind. Zu erkennen ist entsprechend, dass eine Schwenkvorrichtung 52 für die beiden Klappsitze jeweils direkt an der Grundstruktur 38 in Form der Sitzstruktur 24 angebracht ist. Die Sitzstruktur 24 ist hier als gefrästes Aluminiumteil in Form eines CAS-Rahmens mit Verstärkungen ausgeführt. Die Verstärkungen sind dabei durch entsprechende Befräsung von Vollmaterial entstanden. Zu erkennen ist auch, wie das unter den Klappsitzen angeordnete Staufach aus jeweiligen Profilen und Deckklappen zusammengesetzt ist. Rücken- und Sitzpolster mit einklappbarer Sitzfläche sind ebenfalls als Bestandteile 40 der Sitzanordnung 16 dargestellt. Die Klapplagerung 52 ist also unmittelbar nur an dem Grundstruktur 38 und erst vermittels derer und damit mittelbar an der Wandstruktur 22 befestigt. Die Sitzstruktur 24 wie auch die Wandstruktur 22 ist hier also als Metallteil ausgeführt. Die Wandstruktur 22 ist dabei ein einziges einstückiges Frästeil, die Sitzstruktur 24 aus jeweiligen verbundenen einzelnen Frästeilen aufgebaut.

Alle Bestandteile der Tragstruktur 28, also Wandstruktur 22, Sitzstruktur 24, und Befestigungsmittel 26 (nicht dargestellt) im Montagezustand M sind hier hinsichtlich einer gemeinsamen flugtechnischen Festigkeitsbetrachtung synergetisch ergänzend zueinander ausgeführt. Mit anderen Worten wirken der lastpfadoptimierte Verlauf aller Rippen 34 mit der geometrischen Struktur der Sitzstruktur 24 sowie deren konstruktiver Ausführung insbesondere hinsichtlich Verstärkungsbereichen sowie die Befestigungspunkte für, und die dort verwendeten Befestigungsmittel 26 synergetisch zusammen, um die gewünschte mechanische Festigkeit der Tragstruktur 28 zu erzielen.

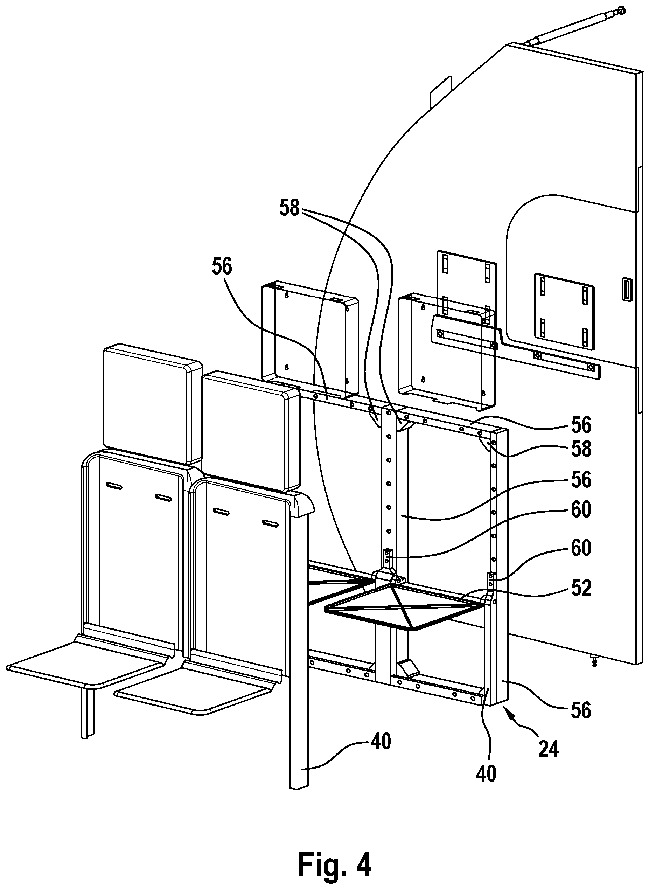

Figur 4 zeigt eine alternative Tragstruktur 28 gemäß dem nicht erfindungsgemäßen Konzept B. Abweichend zu Figur 3 ist hierbei die Sitzstruktur 24 aus Bauteilen in Form handelsüblicher Massenware 56 aufgebaut, nämlich sogenannten Standardprofilen, welche über weitere Massenware 58 in Form von Verbindungswinkeln miteinander verbunden sind. Aufgrund der anderen mechanischen Eigenschaften der Sitzstruktur 24 gegenüber Figur 3 ist daher auch der Verlauf der Rippen 34 gegenüber Figur 4 hinsichtlich der oben genannten gemeinsamen flugtechnischen Festigkeitsbetrachtung verändert, damit Wandstruktur 22 und Sitzstruktur 24 und Befestigungsmittel 26 synergetisch zusammenwirkend wieder entsprechende Festigkeitsanforderungen der Tragstruktur 28 und damit der Trennwandanordnung 20 erfüllen. Die Klapplagerung 52 ist hier mithilfe einer zusätzlichen Klammer 60 ("Bracket") an der Sitzstruktur 24 befestigt. Bauteilen 40 in Form von Profilen zur Bildung der Staufächer sind wieder vorhanden, die Kopfstützen, Klappsitze und Sitzpolster usw. gemäß Figur 3 ausgeführt.

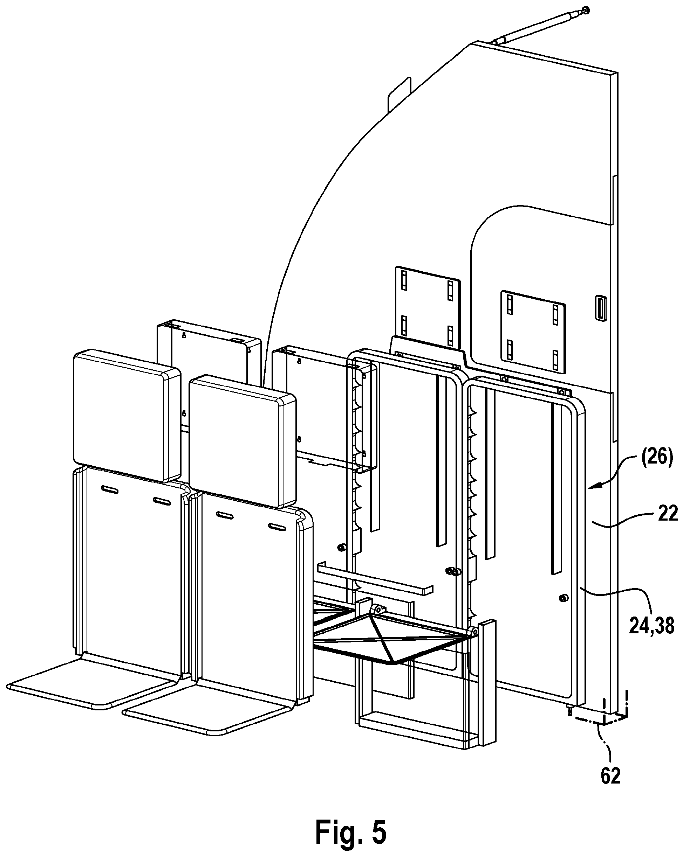

Figur 5 zeigt eine wiederum alternative erfindungsgemäße Ausführungsform einer Trennwandanordnung 20. Hier ist nicht nur die Wandstruktur 22, sondern auch die Sitzstruktur 24 einstückig ausgeführt. Außerdem sind Wandstruktur 22 und Sitzstruktur 24 auch einstückig miteinander ausgeführt, die gesamte Tragstruktur 28 bildet also ein einziges einstückiges Frästeil aus Aluminium. Erfindungsgemäße Befestigungsmittel 26 sind hier implizit bzw. entartet enthalten (daher Bezugszeichen in Klammern) in Form der generischen (Ausfräsen aus gemeinsamer Grundplatte) Stoffschlussverbindung von Wandstruktur 22 und Sitzstruktur 24. Gemäß Figur 5 ist also der Aluminium-CAS-Rahmen in Form der Grundstruktur 38 bzw. Sitzstruktur 24 als Aluminium-Frästeil zusammen mit der gesamten Wandstruktur 22 hergestellt. Auch hier ist, wie gemäß Figur 3, die Klapplagerung 52 direkt an der Grundstruktur 38 befestigt. Ansonsten bestehen keine wesentlichen Unterschiede zu den Konzepten A und B.

Während also bei allen drei Konzepten A bis C die Wandstruktur 22 als Frästeil durch Ausfräsen einer Vollmaterialplatte 62 hergestellt wird, wird beim Konzept C auch die Sitzstruktur 24 und damit die die gesamte Tragstruktur 28 als einstückiges Frästeil durch Ausfräsen einer Vollmaterialplatte 62 hergestellt. Symbolisch ist die Vollmaterialplatte 62 in Figur 5 gestrichelt angedeutet.

Bei allen Konzepten A bis C wird die gesamte Tragstruktur 28 im Montagezustand M einer Lastpfadoptimierung unterworfen. Dies geschieht virtuell durch Modellierung von Sitzstruktur 24, Wandstruktur 22 und Befestigungsmitteln 26 und entsprechenden, hier nicht näher erläuterten CAD-Festigkeitsbetrachtungen durch iterative Umkonstruktion der einzelnen Komponenten.

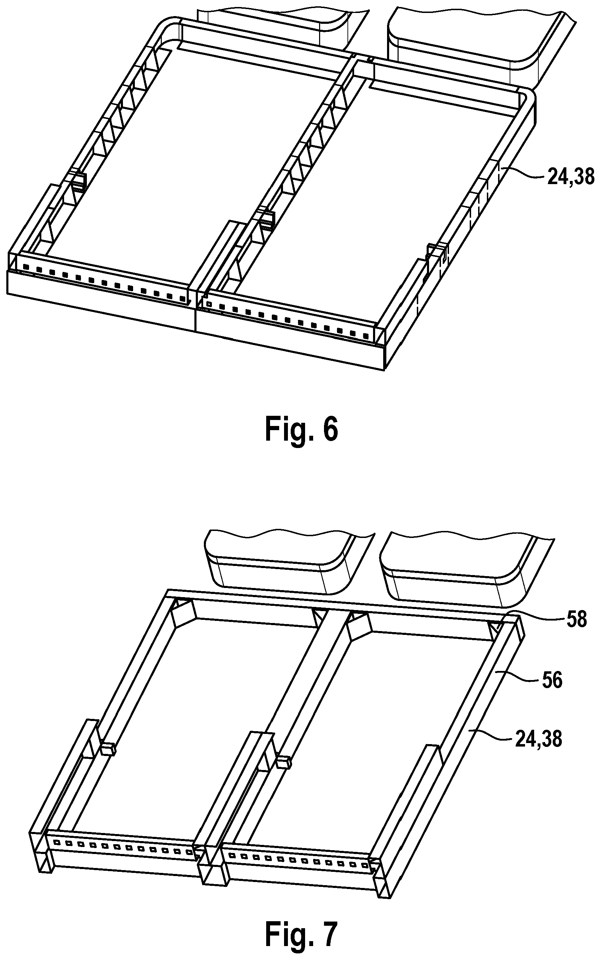

Figur 6 zeigt noch einmal die Sitzstruktur 24 nach dem nicht erfindungsgemäßen Konzept A, bestehend aus individuellen Aluminiumfrästeilen, im Detail, sowie zusätzlich (teilweise) die nicht zur Sitzstruktur 24 gehörenden Kopfstützen und weitere Bestandteile 40 in Form der Staufachrahmen, welche sich im Montagezustand unterhalb der Klappsitze befinden.

Figur 7 zeigt die Sitzstruktur 24 nach dem nicht erfindungsgemäßen Konzept B, zusammengesetzt aus den Massenwaren 56 (Standardprofile) und 58 (Verbindungswinkel) 58, sowie entsprechende Bestandteile 40 gemäß Figur 6.

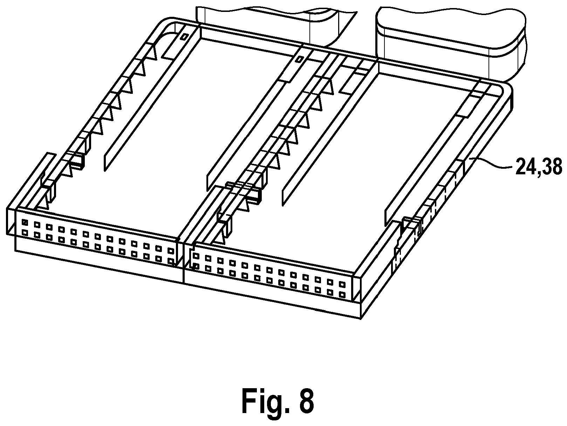

Figur 8 zeigt für das erfindungsgemäße Konzept C ebenfalls die Sitzstruktur 24 als Teil der einstückig befrästen Vollmaterialplatte 62, jedoch zur Verdeutlichung ohne die einstückig hiermit ausgeführte Wandstruktur 22. Weitere Bestandteile 40 wie Kopfstützen und Staufächer sind auch hier entsprechend dargestellt.

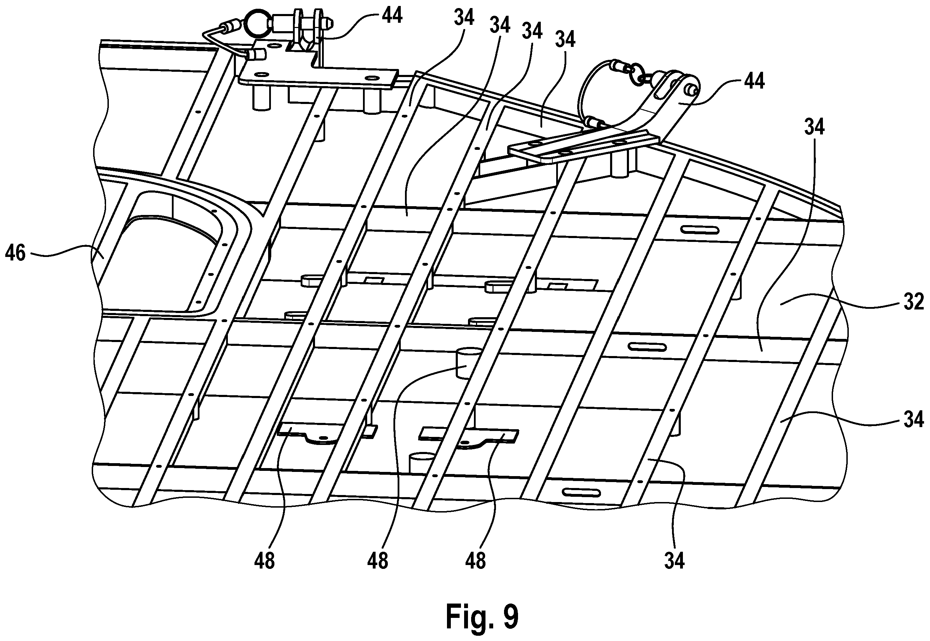

Figur 9 zeigt eine Ansicht der Wandstruktur 22 vom Passagierbereich 8 aus. Die Verkleidung 42 ist hierbei weggelassen. Zu erkennen sind die Befestigungen 44 für die Primärstruktur des Passagierflugzeuges 2, die Wandfläche 32 sowie einstückig hieran angefrästen Rippen 34 und Teile der Halterungen 48 aus Figur 2, welche die Wandfläche 32 zum Passagierbereich 8 hin durchdringen.

### Bezugszeichenliste

- 2: Passagierflugzeug
- 4: Kabine
- 5: Boden
- 6: Flugrichtung
- 7: Decke
- 8: Passagierbereich
- 10: Personalbereich
- 12: Kabinenpersonal
- 14: Trennwand
- 16: Sitzanordnung
- 18a,b: Sitz (Kabinenpersonal-)
- 20: Trennwandanordnung
- 22: Wandstruktur
- 24: Sitzstruktur
- 26: Befestigungsmittel
- 28: Tragstruktur
- 30: Erstreckungsebene
- 32: Wandfläche
- 34: Rippen
- 36: Einzelmittel (Befestigungsmittel)
- 38: Grundstruktur
- 40: Bestandteil (Sitzanordnung)
- 42: Verkleidung (Trennwand)
- 44: Befestigung
- 46: Wandteil (Trennwand)
- 48: Halterung
- 50: Stoßschutzleiste
- 52: Klapplagerung
- 56: Massenware (Standardprofil)
- 58: Massenware (Verbindungswinkel)
- 60: Klammer
- 62: Vollmaterialplatte
- M: Montagezustand

## Patentansprüche

1. Tragstruktur (28) für eine Trennwandanordnung (20) für eine Kabine (4) eines Passagierflugzeuges (2), wobei die Trennwandanordnung (20) eine Trennwand (14) und eine in einem Montagezustand (M) an der Trennwand (14) befestigte Sitzanordnung (16) mit wenigstens einem Kabinenpersonal-Sitz (18a,b) umfasst,
- wobei die Tragstruktur (28) umfasst:
- eine mechanisch tragende Wandstruktur (22) für die Trennwand (14),
- eine mechanisch tragende Sitzstruktur (24) für die Sitzanordnung (16),
**dadurch gekennzeichnet, dass** die Wandstruktur und die Sitzstruktur einstückig miteinander ausgeführt sind, indem sie zusammen als ein einziges, die Wandstruktur und die Sitzstruktur umfassendes Frästeil durch Ausfräsen einer Vollmaterialplatte hergestellt sind.

2. Tragstruktur (28) nach einem der vorhergehenden Ansprüche,
**dadurch gekennzeichnet, dass**
die Wandstruktur (22) eine sich entlang einer Erstreckungsebene (30) der Trennwand (14) erstreckende Wandfläche (32) und sich quer zur Erstreckungsebene (30) von dieser weg erstreckende, fest mit der Wandfläche 32 verbundene Rippen (34) enthält.

3. Tragstruktur (28) nach einem der vorhergehenden Ansprüche,
**dadurch gekennzeichnet, dass**
die Wandstruktur (22) und/oder die Sitzstruktur (24) ein Metallteil ist.

4. Tragstruktur (28) nach einem der vorhergehenden Ansprüche,
**dadurch gekennzeichnet, dass**
die Sitzstruktur (24) eine Grundstruktur (38) der Sitzanordnung (16) ist, die lediglich zur Aufnahme wenigstens eines weiteren Bestandteils (40) der Sitzanordnung (16) ausgebildet ist.

5. Trennwandanordnung (20) für eine Kabine (4) eines Passagierflugzeuges (2), wobei die Trennwandanordnung (20) eine Trennwand (14) und eine an der Trennwand (14) befestigte Sitzanordnung (16) mit wenigstens einem Kabinenpersonal-Sitz (18a,b) umfasst, mit einer Tragstruktur (28) nach einem der vorhergehenden Ansprüche, wobei die Trennwand (14) die Wandstruktur (22) enthält und die Sitzanordnung (16) die Sitzstruktur (24) enthält.

6. Verfahren zum Herstellen einer Tragstruktur (28) nach einem der Ansprüche 1 bis 4 oder einer Trennwandanordnung (20) nach Anspruch 5, bei dem
- die Wandstruktur (22) als Frästeil durch Ausfräsen einer Vollmaterialplatte (62) hergestellt wird,
- wobei die Wandstruktur (22) und die Sitzstruktur (24) dadurch einstückig miteinander ausgeführt werden, dass sie zusammen als ein einziges, die Wandstruktur (22) und die Sitzstruktur (24) umfassendes einstückiges Frästeil durch Ausfräsen der Vollmaterialplatte (62) hergestellt werden.

7. Entwurfsverfahren für eine Tragstruktur (28) nach einem der Ansprüche 1 bis 4 oder einer Trennwandanordnung (20) nach Anspruch 5, bei dem die gesamte Tragstruktur (28) im Montagezustand (M) einer Lastpfadoptimierung unterworfen wird.

## Claims

1. Supporting structure (28) for a bulkhead arrangement (20) for a cabin (4) of a passenger aircraft (2), wherein the bulkhead arrangement (20) comprises a bulkhead (14) and a seat arrangement (16) with at least one cabin crew seat (18a,b), which is secured in an assembled state (M) to the bulkhead (14),
- wherein the supporting structure (28) comprises:
- a mechanically supporting wall structure (22) for the bulkhead (14),
- a mechanically supporting seat structure (24) for the seat arrangement (16),
**characterized in that**
the wall structure and the seat structure are configured in one piece with one another by being produced together as a single milled part comprising the wall structure and the seat structure by milling out a solid material plate.

2. Supporting structure (28) according to one of the preceding claims,
**characterized in that**
the wall structure (22) comprises a wall surface (32), extending along a plane of extent (30) of the bulkhead (14), and ribs (34), extending transversely with respect to the plane of extent (30) away from it and firmly connected to the wall surface 32.

3. Supporting structure (28) according to either of the preceding claims,
**characterized in that**
the wall structure (22) and/or the seat structure (24) are/is a metal part.

4. Supporting structure (28) according to one of the preceding claims,
**characterized in that**
the seat structure (24) is a basic structure (38) of the seat arrangement (16), which is designed only for receiving at least one further component (40) of the seat arrangement (16).

5. Bulkhead arrangement (20) for a cabin (4) of a passenger aircraft (2), wherein the bulkhead arrangement (20) comprises a bulkhead (14) and a seat arrangement (16) fastened to the bulkhead (28) with at least one cabin crew seat (18a,b), having a supporting structure (14) according to one of the preceding claims, wherein the bulkhead (14) comprises the wall structure (22), and the seat arrangement (16) comprises the seat structure (24).

6. Method for producing a supporting structure (28) according to one of Claims 1 to 4 or a bulkhead arrangement (20) according to Claim 5, in which
- the wall structure (22) is produced as a milled part by milling out a solid material plate (62),
- wherein the wall structure (22) and the seat structure (24) are configured in one piece with one another in that they are produced together as a single one-piece milled part, comprising the wall structure (22) and the seat structure (24), by milling out the solid material plate (62).

7. Design method for a supporting structure (28) according to one of Claims 1 to 4 or a bulkhead arrangement (20) according to Claim 5, in which the entire supporting structure (28) is subjected to a load path optimization in the assembled state (M).

## Revendications

1. Structure porteuse (28) pour un ensemble de paroi de séparation (20) pour une cabine (4) d'un avion de passagers (2), l'ensemble de paroi de séparation (20) comprenant une paroi de séparation (14) et un ensemble de siège (16) fixé sur la paroi de séparation (14) dans un état de montage (M) avec au moins un siège (18a, b) pour équipage de cabine,
- la structure porteuse (28) comprenant :
- une structure de paroi (22) de support mécanique pour la paroi de séparation (14),
- une structure de siège (24) de support mécanique pour l'ensemble de siège (16),
**caractérisée en ce que**
la structure de paroi et la structure de siège sont réalisées d'un seul tenant l'une avec l'autre **en ce qu'**elles sont fabriquées ensemble comme une partie fraisée unique comprenant la structure de paroi et la structure de siège par fraisage d'une plaque en matériau massif.

2. Structure porteuse (28) selon l'une des revendications précédentes,
**caractérisée en ce que**
la structure de paroi (22) contient une surface de paroi (32) s'étendant le long d'un plan d'extension (30) de la paroi de séparation (14) et des nervures (34) s'étendant transversalement au plan d'extension (30) de manière à s'en éloigner, reliées de manière solidaire à la surface de paroi (32).

3. Structure porteuse (28) selon l'une des revendications précédentes,
**caractérisée en ce que**
la structure de paroi (22) et/ou la structure de siège (24) sont une pièce métallique.

4. Structure porteuse (28) selon l'une des revendications précédentes,
**caractérisée en ce que**
la structure de siège (24) est une structure de base (38) de l'ensemble de siège (16), qui est réalisée seulement pour recevoir au moins un autre élément constitutif (40) de l'ensemble de siège (16).

5. Ensemble de paroi de séparation (20) pour une cabine (4) d'un avion de passagers (2), l'ensemble de paroi de séparation (20) comprenant une paroi de séparation (14) et un ensemble de siège (16) fixé à la paroi de séparation (14) avec au moins un siège (18a, b) pour équipage de cabine, avec une structure porteuse (28) selon l'une des revendications précédentes, la paroi de séparation (14) contenant la structure de paroi (22) et l'ensemble de siège (16) contenant la structure de siège (24).

6. Procédé de fabrication d'une structure porteuse (28) selon l'une des revendications 1 à 4 ou d'un ensemble de paroi de séparation (20) selon la revendication 5, dans lequel
- la structure de paroi (22) est fabriquée comme une pièce fraisée par fraisage d'une plaque de matériau massif (62),
- la structure de paroi (22) et la structure de siège (24) sont réalisées d'un seul tenant l'une avec l'autre en ce qu'elles sont fabriquées ensemble comme une partie fraisée unique comprenant la structure de paroi (22) et la structure de siège (24) par fraisage de la plaque de matériau massif (62).

7. Procédé de conception pour une structure porteuse (28) selon l'une des revendications 1 à 4 ou d'un ensemble de paroi de séparation (20) selon la revendication 5, dans lequel la totalité de la structure porteuse (28) est soumise à une optimisation de chemin de charge dans l'état de montage (M).
